(19) Europäisches Patentamt

European Patent Office

Office européen des brevets

(11) EP 0 710 593 A1

(12) EUROPÄISCHE PATENTANMELDUNG

(43) Veröffentlichungstag:
08.05.1996 Patentblatt 1996/19

(51) Int. Cl.⁶: B60S 1/08, G01N 27/22

(21) Anmeldenummer: 95116947.3

(22) Anmeldetag: 27.10.1995

(84) Benannte Vertragsstaaten:
DE FR GB IT

(30) Priorität: 07.11.1994 DE 4439174

(71) Anmelder: FORSCHUNGSZENTRUM JÜLICH GMBH
D-52425 Jülich (DE)

(72) Erfinder:
• Schelten, Jakob, Prof. Dr.
D-52428 Jülich (DE)
• Reinartz, Richard
D-52379 Langerwehe (DE)
• Szepesvary, Attila
H-1151 Budapest (HU)

(54) Feuchtigkeitssensor

(57) Die Erfindung bezieht sich auf einen Sensor und eine Vorrichtung zur Messung der Benetzungsdichte von polaren Flüssigkeiten, die sich auf einem Träger aus elektrisch nicht leitendem Material befinden. Die Erfindung soll eine Messung der Benetzungsdichte auch dann ermöglichen, wenn die Flüssigkeit in Tropfenform auf dem Träger aufliegt. Der Sensor besteht erfindungsgemäß aus Leiterbahnen, die bevorzugt kammartig ausgebildet sind und auf der der Flüssigkeit abgewandten Seite des Trägers oder innerhalb des Trägers angebracht sind. Die Leiterbahnen sind mit einer Meßeinrichtung zur Kapazitätsbestimmung verbunden.

FIG. 1

EP 0 710 593 A1

## Beschreibung

Die Erfindung bezieht sich auf einen Sensor zur kapazitiven Messung der Benetzungsdichte einer auf einem Träger aus elektrisch nicht leitendem Material befindlichen polaren Flüssigkeit. Die Erfindung bezieht sich ferner auf eine Vorrichtung zur kapazitiven Messung der Benutzungsdichte mittels des vorgenannten Sensors. Die Erfindung bezieht sich ferner auf eine besondere Verwendung von Sensor und Meßeinrichtung.

Ziel der Erfindung ist es, einen Sensor und eine entsprechende Vorrichtung der eingangs genannten Art zu schaffen, die eine Messung der Benetzungsdichte einer polaren Flüssigkeit, auch wenn diese in Tropfenform aufliegt, ermöglicht.

Dieses Ziel wird erfindungsgemäß durch einen Sensor erreicht, bei dem auf der der Flüssigkeit abgewandten Seite des Trägers oder innerhalb des Trägers einen Kondensator bildende Leiterbahnen mit Anschlüssen für eine Meßeinrichtung zur Kapazitätsbestimmung bzw. zur Bestimmung der Änderung der Kapazität des Kondensators vorgesehen sind. Die durch die Leiterbahnen gebildeten Elektroden weisen dabei zweckmäßigerweise eine kammartige oder fingerartige Struktur auf.

Das Meßprinzip des kapazitiven Sensors, bei dem die Leiterbahnen sich auf der Unterseite des Trägers befinden, beruht darauf, daß sich zwischen den Elektroden auf der Unterseite des Trägers, beispielsweise einer Platte aus Keramik, aus Polymer oder einer Glasplatte, eine elektrische Kapazität ausbildet, deren Größe durch die Geometrie der Elektroden und durch die relative Dielektrisitätskonstanten $\varepsilon$ der Glas- und der Flüssigkeitsschicht, beispielsweise Wasserschicht, auf der gegenüberliegenden Seite bestimmt wird. Aus der Kapazitätsänderung $\delta C$ wird ein elektrisches Signal für die Präsens einer Wasserhaut abgeleitet.

Das Meßprinzip des kapazitiven Sensors, bei dem sich die Leiterbahnen innerhalb des Trägers, zweckmäßigerweise nur einige mm unterhalb der von der Flüssigkeit zu benetzenden Außenfläche, befinden, beruht darauf, daß zwischen den Elektroden, die sich im Träger, beispielsweise einer Platte aus Keramik, aus Polymer oder einer Glasscheibe, befinden, sich eine elektrische Kapazität ausbildet. Ihre Größe wird durch die Anordnung und Gestalt der Elektroden und durch die relative Dielektrisitätskonstante $\varepsilon$ vom Material des Trägers, z.B. vom Glas der Glasscheibe, und von der Flüssigkeit, vom Wasser der Wassertröpfchen, auf der Glasscheibe zwischen den benachbarten Elektrodendrähten bestimmt. Tropfen auf einem vorher tropfenfreien Träger oder auch hinzukommende Tropfen ändern die Gesamtkapazität zwischen den Elektroden. Aus dieser Kapazitätsänderung wird ein elektrisches Signal für die Präsens der Wassertropfen bzw. deren Dichte.

Die erfindungsgemäße Vorrichtung weist eine Meßeinrichtung zur Kapazitätsbestimmung bzw. zur Bestimmung der Änderung der Kapazität des Kondensators auf, deren Schaltung zweckmäßigerweise aus Oszillator, Koppelwiderstand und Parallelschwingkreis besteht und die Kapazitätsänderungen über die Verstimmung des Schwingkreises mißt.

Ein Einsatz von Sensor und Vorrichtung gemäß der Erfindung ist grundsätzlich bei polaren Flüssigkeiten, die sich auf einem Träger aus Keramik, aus Polymer und/oder aus Glas befinden, möglich. Außer Wasser, das polar ist und deshalb ein großes $\varepsilon$ aufweist, sind noch beispielsweise zu nennen: Methanol ($\varepsilon = 33$), Nitrobenzene ($\varepsilon = 35$), Ethanole ($\varepsilon = 24$), Acetone ($\varepsilon = 20$), Formamid ($\varepsilon = 109$).

Eine besondere Verwendung von Sensor und Vorrichtung besteht im Einsatz als Detektor bzw. Detektoreinrichtung für Wassertropfen auf Windschutzscheiben, die in Abhängigkeit von der Tropfendichte mittels Scheibenwischer abgewischt werden. Dabei ist zweckmäßig, daß der Scheibenwischer ab einer Mindestdichte der Regentropfen automatisch betätigt wird.

Der erfindungsgemäße Sensor bzw. die Vorrichtung mit Sensor ist somit in Fahrzeugen einsetzbar und ermöglicht ein automatisches Abwischen beispielsweise der Windschutzscheibe eines Autos, ohne daß, wie dies bisher üblich ist, der Scheibenwischer in festen Zeitabständen wieder eingeschaltet wird. Da der Scheibenwischer ab einer elektronisch einstellbaren Schwelle der Tropfendichte in Tätigkeit gesetzt wird, entfällt auch die Notwendigkeit, den Scheibenwischer in Stufen, je nach Regendichte, einschalten zu müssen.

Dabei ist die Ausführungsform des Sensors, bei dem die Elektroden sich auf der der zu benetzenden Seite gegenüberliegenden Seite der Glasscheibe befinden, insofern von Vorteil, als sie nachträglich in jedes Fahrzeug eingesetzt werden kann. Außerdem ist der Sensor nicht der Witterung ausgesetzt, da er im Innenraum des Fahrzeuges untergebracht ist.

Selbstverständlich ist die Struktur der Elektroden nicht auf die oben angegebenen Ausführungsformen beschränkt. Sie kann vielmehr auch die Form eines Emblems aufweisen, das in geeigneter Weise als Kondensator gestaltet ist.

Sensorausführungen und Schaltungsanordnungen der Vorrichtung gemäß der Erfindung sind in der Zeichnung schematisch dargestellt. Sie werden im folgenden anhand des Beispiels von Wassertropfen auf einer Glasscheibe näher erläutert:

Es zeigen:

Figur 1    Querschnitt durch Glasscheibe und Elektroden, die sich unterhalb der Glasscheibe befinden;

Figur 2    Draufsicht auf die kammartige Elektrodenstruktur der Elektroden gemäß Figur 1;

Figur 3    Blockschaltbild mit Oszillator, Koppelwiderstand und Parallelschwingkreis;

Figur 4    Querschnitt durch Glasscheibe und Elektroden, die sich innerhalb der Glasscheibe befinden;

Figur 5        Draufsicht auf die fingerstrukturartige Elektrode gemäß Figur 4;

Figur 6        Aufsicht und Schnitt einer Kammelektrode mit N = 5 Elektroden.

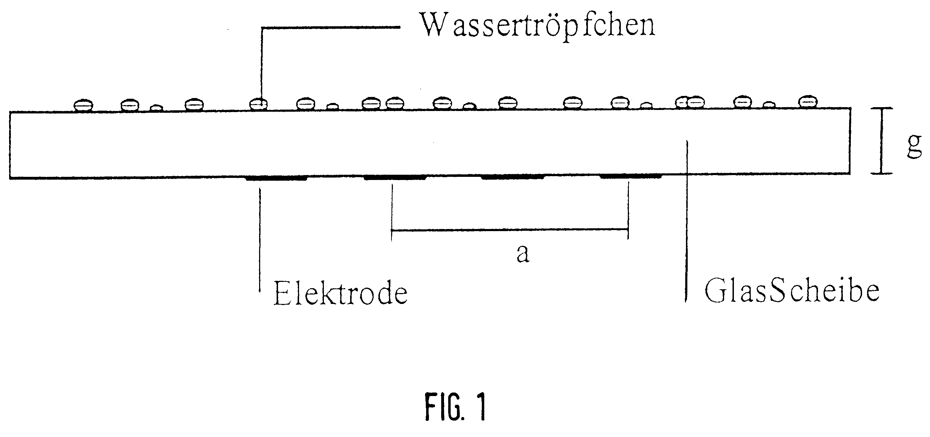

Figur 1 zeigt einen Schnitt durch die Anordnung von Elektrode und Glasscheibe.

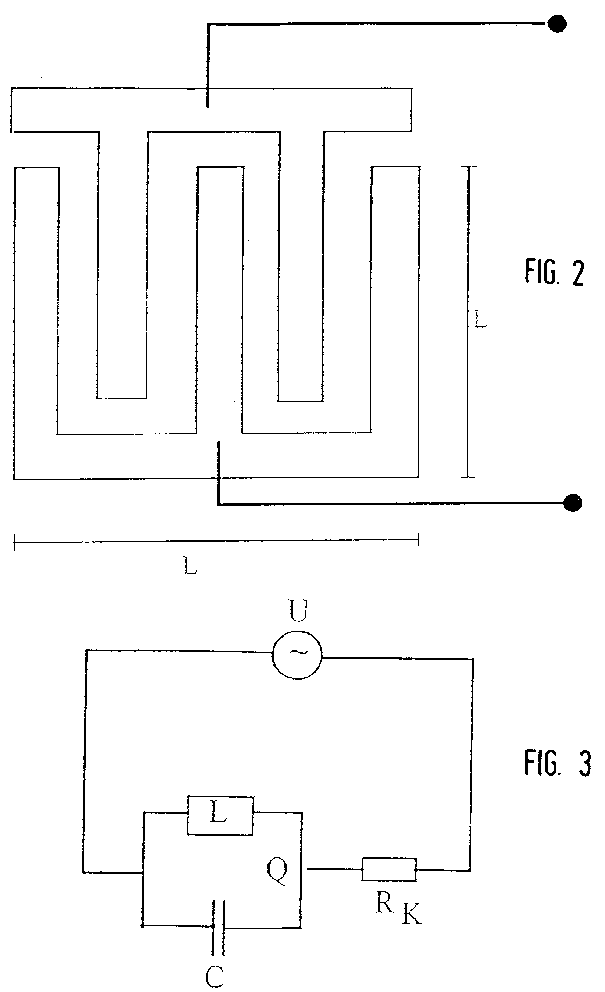

Zur Steigerung des Kapazitätsbeitrages der Wasserschicht sollten alle Abmessungen wie Stegbreite und Spaltweite vergleichbar mit dem Abstand zwischen Elektroden- und Wassertröpfchenebene sein (siehe die Elektroden gemäß Figur 2).

Mit einem typischen g-Wert von 5 bis 10 mm und einer Elektrodenfläche von 50 x 50 bis 100 x 100 mm$^2$ wird eine Kapazität $C_E$ von etwa 30 pF abgeschätzt.

Der Beitrag eines 0,1 mm dicken Wasserfilms auf der Glasspalte, der für Tröpfchen von 3 mm $\varnothing$ einer Belegungsdichte von 3 % entspricht, trägt zu der Elektrodenkapazität trotz des großen $\varepsilon$-Wertes von 80 für das polare Wasser mit einer Änderung $\Delta C_E$ von nur etwa 3 pF bei.

Beide Werte sind mit einer etwa 100 pF großen Zuleitungskapazität $C_Z$ zu vergleichen. Diese Zahlen verlangen mithin nach genauen Kapazitätsmessungen, um Änderungen von weniger als 1 % bestimmen zu können.

Diese kleine Kapazitätsänderungen werden zweckmäßigerweise über die Verstimmung eines Schwingkreises gemessen, bei dem die Kapazität aus Zuleitungs- und Elektrodenkapazität $C = C_Z + C_E$ besteht. Die Resonanzfrequenz $f_R$ wird typischerweise auf 1 MHz festgelegt. Bei diesen Frequenzen erreicht man Güten Q von etwa 100 und kommt mit kleinen Spulen aus. Die Induktivität berechnet sich aus $\omega R^{-2} = LC$ zu L = 3 mH. Der Schwingkreis wird mit einem 1 MHz-Oszillator von 5 V über einen Koppelwiderstand $R_K$ vergleichbar mit dem Widerstand des Parallelschwingkreises im Resonanzfall, d.h. $R_S = Q/(\omega_R C)$, versorgt. Mit den obigen Zahlen ist $R_S = 0,25$ M$\Omega$.

Figur 3 zeigt das Blockschaltbild der Signalverarbeitung. Die Leistung im Schaltkreis ist sehr klein, weniger als 0,1.

Bei einer relativen Änderung der Resonanzfrequenz, z.B. aufgrund von Kapazitätsänderungen in der Größe $\Delta \omega_R/\omega_R \sim 2/Q$ ändert sich der Schwingkreiswiderstand merklich, nämlich um $\Delta R_S/R_S \sim 55$ %, was mit einer gut beobachtbaren Spannungsänderung am Schwingkreis verbunden ist. Die hier angenommene relative Resonanzfrequenzänderung $\Delta \omega_R/\omega_R \sim 2/C$ von 2 % wird von der kleinen relativen Kapazitätsänderung $\Delta C/C \sim 4/Q$ hervorgerufen, die durch Wassertröpfchen auf der Glasscheibe verursacht werden können. Dazu müssen Wassertröpfchen von 3 mm bzw. 1 mm Durchmesser mmit einer 12 bzw. 36%igen Flächenbelegungsdichte vorliegen. Aus diesen Angaben wird deutlich, daß noch Wassertröpfchen mit Flächenbelegungsdichten von 1 % nachweisbar sind.

Bei einer Verwendung des Sensors als Tropfendetektor für die Windschutzscheibe eines Fahrzeuges wird eine dünne, möglichst noch durchsichtige Platine mit Leiterbahnen als Elektroden nach Figur 2 im Wageninnern gegen die Windschutzscheibe hinter dem Rückspiegel geklebt, ist damit nicht von innen sichtbar und behindert kaum die Sicht. Die Zuleitung besteht aus einer dünnen Koaxialleitung, die entlang des Scheibenrands geführt wird. Die Versorgungselektronik, die aus Oszillator, Schwingkreis, Verstärker, Komparator und Schaltrelais besteht, wird im Motorraum untergebracht. Genutzt wird die 12 V-Boardspannung. Der Schaltzeitpunkt, entsprechend einer gegebenen Tröpfchendichte, ist extern einstellbar. Wiedereingeschaltet wird der Scheibenwischermotor, wenn die Tröpfchendichte einen Schwellwert überschritten hat.

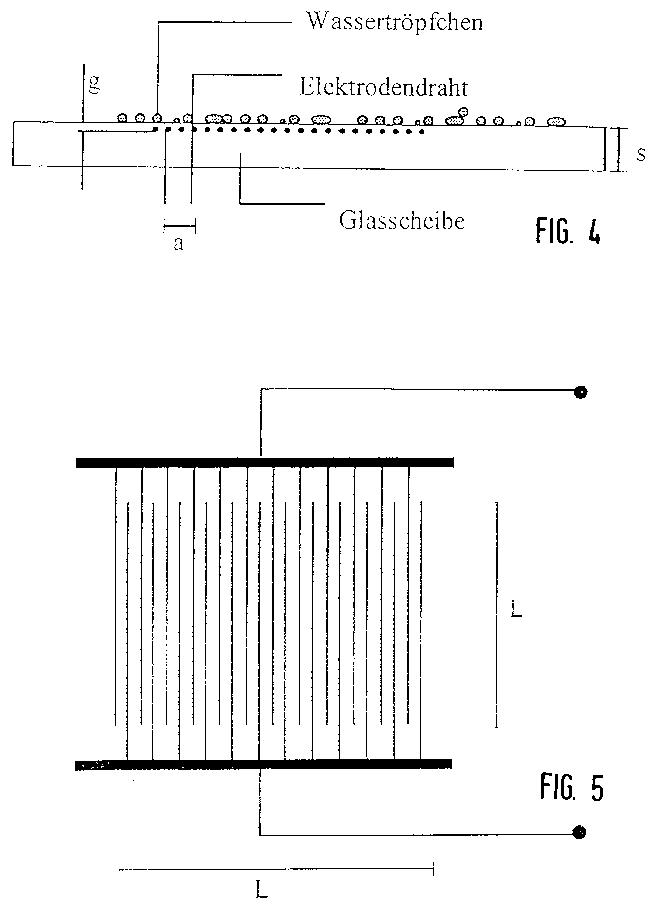

In Figur 4 ist die Ausführungsform des Sensors dargestellt, bei dem sich die Elektroden innerhalb der Glasscheibe befinden. Die Elektrodendrähte befinden sich in der Tiefe g mit elektrischer Periode a. Die Elektrodendrähte liegen nur einige Zehntel mm unterhalb der Außenoberfläche und haben einen gegenseitigen Abstand, der vergleichbar mit dem zur Oberfläche ist, optimal etwa sechsmal so groß.

In Figur 5 ist eine Aufsicht der Elektroden gezeigt. Die Fingerstruktur dient der Kapazitätssteigerung. Bei Verwendung des Sensors in einem Fahrzeug ist Voraussetzung, daß der Wischbereich des Scheibenwischers den Verzahnungsbereich überstreicht.

Bei einem Abstand von a/2 = 4 mm, einer Ausdehnung von 100 mm x 100 mm und einem Drahtdurchmesser von etwa 1 mm ist die Elektrodenkapazität $C_E \sim 100$ pF und vergleichbar mit einer Zuleitungskapazität von $C_Z \sim 100$ pF. Für eine Wasserschicht von 0,1 mm Dicke auf der Glasscheibe wird eine Kapazitätsänderung von etwa 10 pF erwartet. Dabei entspricht die Wassermenge von 0,1 mm Wasserschicht einer Flächenbelegungsdichte von 3 % mit Tröpfchen von 3 mm $\varnothing$ oder von 10 % mit Tröpfchen von 1 mm $\varnothing$.

Die relative Gesamtkapazitätsänderung $\Delta C/C$ ist dabei 5 %; das ist ein Wert, der leicht zu messen ist.

Auch in diesem Falle ist die Kapazitätsänderung über die Verstimmung eines Schwingkreises zu messen, bei dem die Schwingkreiskapazität aus Zuleitungs- und Elektrodenkapazität $C = C_Z + C_E$ besteht. Die Resonanzfrequenz $f_R$ wird typischerweise auf 1 MHz festgelegt. Bei diesen Frequenzen erreicht man Güten Q von etwa 100 und kommt mit kleinen Spulen aus. Die Induktivität berechnet sich aus $\omega_R^{-2} = LC$ zu L = 1,5 mH. Der Schwingkreis wird mit einem 1 MHz-Oszillator von 5 V über einen Koppelwiderstand $R_K$ vergleichbar mit dem Widerstand des Parallelschwingkreises im Resonanzfall, d.h. $R_S = Q/\omega_R C$, versorgt. Mit den obigen Zahlen ist $R_S = 0,12$ M$\Omega$.

In Figur 3 ist das Blockschaltbild der Signalverarbeitung wiedergegeben.

Bei einer relativen Änderung der Resonanzfrequenz, z.B. aufgrund von Kapazitätsänderungen in der Größe $\Delta \omega_R/\omega_R \sim 2/Q$ ändert sich der Schwingkreiswiderstand merklich, nämlich um $\Delta R_S/R_S \sim 55$ %, was mit einer gut beobachtbaren Spannungsänderung am Schwingkreis verbunden ist.

Die hier angenommene relative Resonanzfrequenzänderung von $\Delta\omega_R/\omega_R \sim 2/Q$ von 2 % wird von der relativen Kapazitätsänderung $\Delta C/C \sim 4/Q$ von 4 % hervorgerufen, die durch Wassertröpfchen auf der Glasscheibe verursacht werden können. Dazu müssen Wassertröpfchen von 3 mm bzw. 1 mm Durchmesser mit einer 2,5 bzw. 7,5%igen Flächenbelegungsdichte vorliegen.

Aus diesen Angaben wird deutlich, daß noch Wassertröpfchen mit Flächenbelegungsdichten von 0,1 % leicht nachweisbar sind.

Der Sensor gemäß Figur 4 kann, als Tropfensensor mit Fingerstruktur gemäß Figur 5, in die Frontscheibe eines Fahrzeuges bei der Fertigung eingearbeitet sein. Er befindet sich vorzugsweise hinter dem Rückspiegel und ist damit nicht von innen sichtbar und behindert auch nicht die Sicht bei der Autofahrt. Jeder andere Platz in der Frontscheibe und andere Formen der Elektroden sind denkbar, soweit sie nur im Wischbereich des Scheibenwischers liegen.

Die Zuleitung besteht wieder aus einer dünnen Koaxialleitung, die entlang des Scheibenrands geführt wird. Die Versorgungselektronik, die aus Oszillator, Schwingkreis, Verstärker, Komparator und Schaltrelais besteht, wird im Motorraum untergebracht. Genutzt wird die 12 V-Boardspannung. Der Schaltzeitpunkt, entsprechend einer gegebenen Tröpfchendichte, ist extern einstellbar. Wiedereingeschaltet wird der Scheibenwischermotor für eine einmalige komplette Wischbewegung, wenn ein Schwellwert für die Tröpfchendichte überschritten wird.

Vorteilhaft ist bei dieser Version der Vorrichtung, daß der Sensor nicht der Witterung ausgesetzt ist, sondern im Glas eingeschmolzen wird und dadurch auch wischfest ist. Die Anordnung ist bei einer 100 cm² großen Sensorfläche sehr empfindlich auf Wassertröpfchen. Die Fingerstruktur ist transparent, ansehnlich gestaltbar und am Scheibenrand unterbringbar.

Der Sensor kann allerdings nicht nachträglich in ein Fahrzeug eingebaut werden, es sei denn über den Einbau einer neuen Frontscheibe mit eingeschmolzenen Elektroden.

Berechnungen und Messungen zum kapazitiven Sensor:

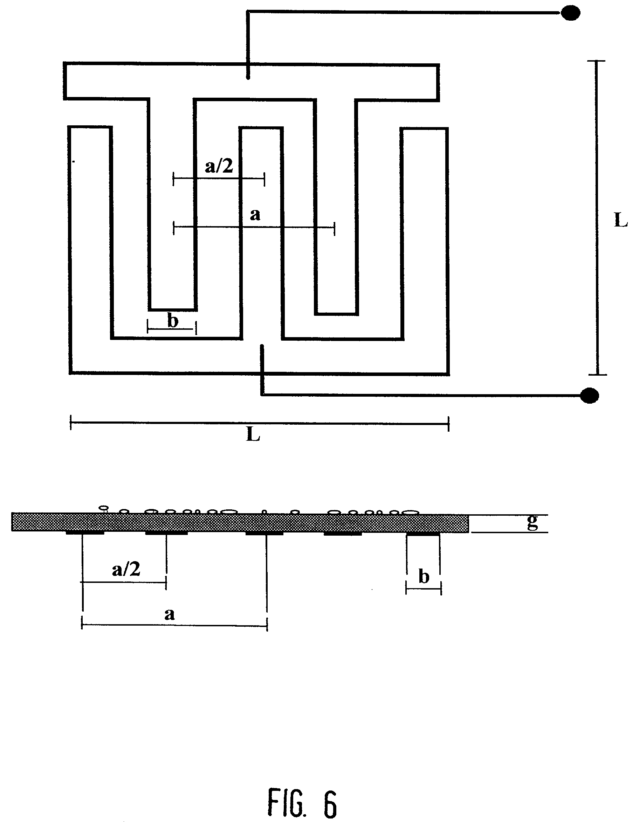

Figur 6 zeigt Aufsicht und Schnitt einer Kammelektrode mit N = 5 Elektroden:

a       elektrische Periodenlänge,
a/2    geometrische Periodenlänge,
b       Elektrodenbreite,
g       Abstand der Wassertröpfchen zu den Leiterbahnen,
L       äußere Abmessungen mit $L = (N - 1)a/2 + b$.

Die geomtrischen Daten der Elektrode sind so zu wählen, daß das Feld an der Außenseite der Glasscheibe maximal wird, denn dann ist die Detektorempfindlichkeit maximal.

Tabelle 1 zeigt die berechneten optimalen Tabellenwerte für Kammstrukturen bei unterschiedlichen Abständen zwischen Tröpfchen und Leiterbahnen.

| g ( mm ) | a (mm) | a/2 (mm) | b (mm) | N | L (mm) |
|---|---|---|---|---|---|
| 1 | 6.25 | 3.125 | 1 | 33 | 101 |
| 2 | 12.5 | 6.25 | 2 | 17 | 102 |
| 3 | 18.75 | 9.375 | 3 | 11 | 96.75 |
| 5 | 31.25 | 15.625 | 5 | 7 | 98.75 |
| 7 | 43.4 | 21.7 | 7 | 5 | 93.8 |

Tabelle 1    Empfohlene Kammstrukturen für unterschiedliche g-Werte.

Weitere Ausführungsbeispiele:

Für drei verschiedene Elektroden A, B und C mit Kammstruktur wurden Messungen mit einem Kapazitätsmeßgerät durchgeführt. Das Meßprinzip beruht darauf, daß die zu messende Kapazität Teil eines internen Schwingkreises wird und die Resonanzbedingung vonhand eingestellt wird. Kapazitätsänderungen von 1 pF sind ablesbar, kleinere Änderungen wahrnehmbar. Die absolute Meßgenauigkeit liegt ebenfalls bei etwa 1 pF. An der angezeigten Spannungsamplitude ist die Bedämpfung des Schwingkreises beobachtbar.

Die Elektroden bestehen aus 1,5 mm dicken Platinen mit Leiterbahnen auf der Platinenoberseite, die Unterseite enthält kein leitendes Material. Die Tabelle 2 macht Angaben zur elektrischen Periode, zur Stegbreite, zur Zahl der Stege, zur Gesamtgröße und zur Grundkapazität.

| Elektrode | a in mm | b in mm | N | L | $C_0$ in pF |
|-----------|---------|---------|-----|-----|-------------|
| A | 6 | 1.5 | 24 | 70 | 50 |
| B | 12.5 | 2 | 17 | 100 | 30 |
| C | 31.2 | 5 | 7 | 100 | 11.5 |

Tabelle 2    Angaben zu den Meßelektroden

Die Kapazitätsänderungen $\Delta C$, die durch Isolatorplatten, die auf die Leiterbahnen gelegt wurden, gemessen werden, sind in Tabelle 3 angegeben.

| Elek-trode | 0.2 mm Plastik-folie | 1 mm Plexi-glas | 2 mm Plexi-glas | 2 mm Fenster-glas | 4 mm Fenster-glas | Front-scheibe Honda | Seiten-scheibe 3.5 mm |
|------------|------|------|------|------|------|------|------|
| A | 2.5 pF | 9 pF | 12 pF | 35 pF | | 40 pF | 40 pF |
| B | 1.2 pF | 5 pF | 18 pF | 20 pF | 24 pF | | |
| C | 0.3 pF | 1.5 pF | 2.5 pF | 6 pF | 9 pF | | |

Tabelle 3 Kapazitätsänderungen durch aufgelegte Isolatorscheiben.

Die gemessenen Kapazitätsänderungen $\delta C$ durch Wassertröpfchen, die mit einer Injektionsnadel auf die Oberseite der abgedeckten Leiterbahnen gespritzt wurden, werden in den Tabellen 4, 5 und 6 angegeben. Bei der Elektrode A mit der Halbperiode von $a/2 = 3$ mm werden Wassertröpfchen nur mit dünnen Abdeckungen von weniger als 1 mm Stärke hinreichend empfindlich gemessen. Meßergebnisse mit der 0,2 mm dicken Plastikfolie sind in Tabelle 4 wiedergegeben.

| Elektrode A von ~50 cm$^2$ Fläche und 0.2 mm Plastikfolie als Isolator | | | |
|---|---|---|---|
| Wassermenge in ml | Effektive Wasserschicht in mm | Äquivalente Belegungsdichte mit 3 mm $\phi$ Tröpfchen in % | Kapazitätserhöhung in pF |
| 0.1 | 0.002 | 0.066 | 1.5 |
| 0.2 | 0.004 | 0.133 | 2 |
| 0.3 | 0.006 | 0.192 | 4 |
| 0.4 | 0.008 | 0.266 | 5 |
| 0.5 | 0.010 | 0.33 | 6 |
| 0.6 | 0.012 | 0.40 | 7 |
| 0.7 | 0.014 | 0.46 | 8.5 |
| 0.8 | 0.016 | 0.53 | 9.5 |
| 0.9 | 0.018 | 0.59 | 10 |
| 1.0 | 0.020 | 0.66 | 11 |

Tabelle 4 Kapazitätsänderung durch Wassertröpfchen mit Elektrode A

Etwas kleinere Kapazitätserhöhungen erhält man mit den gröberen Elektroden und entsprechend größeren Abständen von 2 mm bzw. 4 mm der Tröpfchen von den Leiterbahnen.

Diese experimentellen Resultate machen deutlich, daß man mit ausreichender Empfindlichkeit Tröpfchen auf Windschutzscheiben messen kann.

| Elektrode B  von ~100 cm² Fläche mit 2 mm Fensterglas als Isolator | | | |
|---|---|---|---|
| Wassermenge in ml | Effektive Wasserschicht in mm | Äquivalente Belegungsdichte mit 3 mm φ Tröpfchen in % | Kapazitäts- erhöhung in pF |
| 0.2 | 0.004 | 0.133 | 1.0 |
| 0.4 | 0.008 | 0.266 | 2.0 |
| 0.6 | 0.012 | 0.40 | 2.8 |
| 0.8 | 0.008 | 0.266 | 3.5 |
| 1.0 | 0.020 | 0.66 | 4.0 |

Kapazitätsänderung durch Wassertröpfchen mit Elektrode B

Tabelle 5

| Elektrode C  von ~100 cm² Fläche mit 4 mm Fensterglas als Isolator | | | |
|---|---|---|---|
| Wassermenge in ml | Effektive Wasserschicht in mm | Äquivalente Belegungsdichte mit 3 mm φ Tröpfchen in % | Kapazitäts- erhöhung in pF |
| 0.2 | 0.004 | 0.133 | 0.8 |
| 0.4 | 0.008 | 0.266 | 1.3 |
| 0.6 | 0.012 | 0.40 | 1.5 |
| 0.8 | 0.008 | 0.266 | 2.0 |
| 1.0 | 0.020 | 0.66 | 2.5 |

Tabelle 6 Kapazitätsänderung durch Wassertröpfchen mit Elektrode C

Meßungenauigkeiten treten dadurch auf, daß die Kapazität empfindlich davon abhängt, wie gut die Isolatoren (Folie, Plexiglasscheibe oder Glasscheibe) auf den Leiterbahnen aufliegen. Durch Anpressen wird die Kapazität erheblich verändert.

**Patentansprüche**

1.  Sensor zur kapazitiven Messung der Benetzungsdichte einer auf einem Träger aus einem elektrisch nicht leitenden Material befindlichen polaren Flüssigkeit, bei dem auf der der Flüssigkeit abgewandten Seite des Trägers oder innerhalb des Trägers einen Kondensator bildende Leiterbahnen mit Anschlüssen für eine Meßeinrichtung zur Kapazitätsbestimmung bzw. Bestimmung der Änderung der Kapazität des Kondensators vorgesehen sind, wobei die durch die Leiterbahnen gebildeten Elektroden eine kammartige oder fingerartige Struktur aufweisen.

2.  Vorrichtung zur kapazitiven Messung der Benetzungsdichte einer auf einem Träger aus elektrisch nicht leitendem Material befindlichen polaren Flüssigkeit, bestehend aus einem Sensor gemäß Anspruch 1 und einer Meßeinrichtung zur Kapazitätsbestimmung bzw. zur Bestimmung der Änderung der Kapazität des Kondensators.

3. Vorrichtung nach Anspruch 2,
   **dadurch gekennzeichnet**,
   daß die Schaltungsanordnung der Meßeinrichtung aus Oszillator, Koppelwiderstand und Parallelschwingkreis besteht.

4. Verwendung von Sensor und/oder Vorrichtung nach einem der vorhergehenden Ansprüche als Detektor bzw. Detektoreinrichtung für Wassertropfen auf Windschutzscheiben, die in Abhängigkeit von der Benetzungsdichte mittels Scheibenwischer abgewischt werden.

5. Verwendung nach Anspruch 4,
   **dadurch gekennzeichnet**,
   daß der Scheibenwischer ab einer vorgegebenen Benetzungsdichte automatisch betätigt wird.

6. Verwendung des Sensors gemäß Anspruch 5,
   **dadurch gekennzeichnet**,
   daß der aus den Leiterbahnen gebildete Sensor die Gestalt eines vorgegebenen Emblems aufweist.

FIG. 1

FIG. 2

L

L

FIG. 3

U

L

Q

C

$R_K$

Wassertröpfchen

Elektrodendraht

g

s

a

Glasscheibe

**FIG. 4**

L

L

**FIG. 5**

FIG. 6

))) Europäisches
Patentamt

**EUROPÄISCHER RECHERCHENBERICHT**

Nummer der Anmeldung

| EINSCHLÄGIGE DOKUMENTE | | | EP 95116947.3 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl.6) |
| X | DE - A - 3 937 605 (VDO) * Gesamt * | 1 | B 60 S 1/08 G 01 N 27/22 |
| Y | | 2-6 | |
| Y | US - A - 4 827 198 (MUELLER) * Gesamt * | 2-6 | |
| | | | RECHERCHIERTE SACHGEBIETE (Int. Cl.6) |
| | | | B 60 S G 01 N |

Der vorliegende Recherchenbericht wurde für alle Patentansprüche erstellt.

| Recherchenort | Abschlußdatum der Recherche | Prüfer |
|---|---|---|
| WIEN | 07-02-1996 | NARDAI |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82